# EUROPEAN PATENT APPLICATION

(11) **EP 4 116 014 A1**
(43) Date of publication of application: **11.01.2023**
(21) Application number: 21020360.0
(22) Date of filing: 08.07.2021
(51) Int. Cl.: B22F 10/25, B22F 10/32, B22F 10/85, B22F 12/20, B22F 12/50, B22F 12/57, B23K 26/342, B23K 26/70, B33Y 10/00, B33Y 30/00, B33Y 40/00

(54) **COOLING SYSTEM FOR ADDITIVE MANUFACTURING**

(71) Applicant: Linde GmbH, 82049 Pullach (DE)
(72) Inventor: Fieret, Jacob, 82149 Pullach (DE); Coroado, Julio, 82149 Pullach (DE)
(74) Representative: Gellner, Bernd

(57) **Abstract**

A method of cooling a component produced by additive manufacturing (AM) process, said method comprising the steps of providing a source of a liquefied carbon dioxide; releasing the liquefied carbon dioxide into a chamber to expand and cool; collecting formed solid carbon dioxide in the chamber; extracting a non-solid carbon dioxide byproduct via at least a first conduit; and applying the solid carbon dioxide to the component.

## Description

### TECHNICAL FIELD

The present invention relates generally to a system and method for use in additive manufacturing processes. In particular, but not exclusively, the present invention relates to directed energy deposition additive manufacturing processes.

### INTRODUCTION

Additive manufacturing can be carried in various manners using a variety of heat sources and materials. The present invention is related to additive manufacturing using a metal wire or powder as the feedstock material and a laser, an electron beam or an arc as a heat source that melts the feedstock material as it is deposited.

This broad family of processes is often referred to as "directed energy deposition", or DED. One method of DED for which the present invention is particularly well-suited is wire arc additive manufacturing, in which the feedstock material is a wire and the heat source is an electrical arc. However, it will be understood that the present invention may be equally applicable to use with other DED methods.

DED processes often use a process gas, directed coaxially or off-axis with a nozzle towards the arc or laser focus, in order to prevent air from reducing the quality of the built component through the effects that oxygen, nitrogen and moisture can have on the fusion process of the wire or powder under the high temperatures that are generated in order to melt and fuse the powder or wire. Then depending on the material used, the process gas can be an inert gas (e.g. argon, nitrogen), or a mixture of an inert gas with an active component in order to achieve certain effects (e.g. hydrogen).

There are instances where components built with DED retain their heat for a considerable time, and the heat cannot diffuse quickly to the base plate, in particular if the metal used has a poor thermal conductivity. In such cases heat loss is effected mainly through radiation, and by natural convection through the surrounding gas or by forced cooling using jets of gas at various locations. Alternatively, cooling can be effected through forced ventilation for example by means of a fan, or recycled and cooled process gas directed towards the component through nozzles.

It is an object of this invention to provide an apparatus and a method for efficiently cooling the structures during the directed energy deposition additive manufacturing process.

### SUMMARY OF THE INVENTION

According to an aspect of the invention for which protection is sought, there is provided a method of cooling a component produced by additive manufacturing (AM) process, said method comprising the steps of:
- providing a source of a liquefied carbon dioxide;
- releasing the liquefied carbon dioxide into a chamber to expand and cool;
- collecting formed solid carbon dioxide in the chamber;
- extracting a non-solid carbon dioxide by-product via at least a first conduit; and
- applying the solid carbon dioxide to the component.
Advantageously, this method allows to produce and deliver the solid carbon dioxide in *situ,* wherein the whole process occurs simultaneously in the build chamber. The presence of the at least a first conduit in the system allows to efficiently extract the gaseous carbon dioxide, thus avoiding the disruption of the flow of the process gas during the manufacturing of the component. The combination of the ability to produce liquid carbon dioxide together with the control of its delivery to the component allows for a reproducible and efficient cooling of the component. Therefore, the method advantageously allows to use the solid carbon dioxide to cool down parts of the component in a controllable and efficient manner as no disruption of the process by the by-products of solid carbon dioxide formation will occur. It also enables the precise cooling of the parts of the component when the temperature of this part exceeds a preset threshold.

In an embodiment, the additive manufacturing process is a direct energy deposition (DED) method. In another embodiment, the DED method is a wire arc additive manufacturing (WAAM) method.

In an embodiment, the solid carbon dioxide is applied to the component through a dispensing aperture, optionally wherein the dispensing aperture is part of nozzle. Advantageously, the presence of the dispensing aperture allows for controlled and precise delivery of the solid carbon dioxide to the surface of the component to be cooled down and to avoid the undesired build-up of heat. The dispensing aperture being a nozzle has an advantage of controlling the flow rate as the flow in the throat of the nozzle is minimal, and the pressure build up allows for a more efficient distribution of solid carbon dioxide to the component.

In another embodiment, the solid carbon dioxide is supplied into the nozzle by means of a dosing mechanism. In yet another embodiment, the dosing mechanism is a spinning screw, a valve or a conveyor belt. Advantageously, the presence of the dosing mechanism allows to control the amount and the rate of delivery of the liquid carbon dioxide to the surface of the heated component. Furthermore, it also allows a continuous collection of the liquid carbon dioxide from the production chamber and its supply to the component.

In an embodiment, the non-solid carbon dioxide by-product is further extracted through at least a second conduit located before the nozzle. Advantageously, this allows for an even more efficient extraction of the gaseous carbon dioxide.

In another embodiment, the method further comprises a step of controlling temperature of the component by means of a sensor. In yet another embodiment, the sensor is a thermal camera. Advantageously, the presence of a thermal sensor allows to evaluate the temperature gradient of the component and in turn to direct the solid carbon dioxide to the areas where increased temperature is detected.
In an embodiment, the method comprises determining an amount of solid carbon dioxide to be applied to the component in dependence on the measured temperature. For example, the method may comprise determining an average temperature in a plurality of regions of the top layer of the component, and determining an amount of solid carbon dioxide to be applied to each region in dependence on the measured temperature. As will be well understood by the skilled person, solid carbon dioxide has a known cooling capacity per unit volume, so a required cooling effect may be determined based on the measured temperature, and a corresponding amount of solid carbon dioxide may be applied.

In yet another embodiment, the method further comprises the step of removing carbon dioxide gas generated during the cooling process. When the solid carbon dioxide is deposited onto the surface of the heated component, upon contact it is transformed into the gaseous carbon dioxide. Advantageously, the step of removing this gaseous CO₂ allows for a more even process of manufacturing the component because there is not disturbance of the process gas flow by the formed volume of CO₂.

In an embodiment, the component is made from ferrous alloy. Advantageously, this allows the manufacture of a wide range of components using materials with different thermal conductivity, and different mechanical properties (hardness, toughness and resilience, malleability, plasticity etc).

According to an aspect of the present invention there is provided an apparatus for cooling a component produced using AM process, said apparatus comprising:
- a source of a liquefied carbon dioxide,
- a dosing mechanism configured to supply a solid carbon dioxide to the component through a nozzle; and
- at least a first conduit for extracting non-solid carbon dioxide by-product; and
- a controller
wherein the controller is arranged to:
- control a process of producing the component;
- control a process of producing a solid carbon dioxide from the liquefied carbon dioxide; and
- control cooling of the component by providing the solid carbon dioxide to the component by means of the dosing mechanism.
Advantageously, the presence of a controller that is capable of simultaneously controlling the manufacturing process, the process of producing the cooling carbon dioxide and the process of cooling the component allows for a more efficient and cost-effective method of producing the components by means of the DED technique.
In an embodiment, the apparatus further comprises at least a second conduit located before the nozzle.
According to another aspect of the present invention there is provided an apparatus for producing a component using AM process, said apparatus comprising:
- a manufacturing space;
- a heat source;
- a source of a feedstock material;
- a source of a process gas; and
- a cooling apparatus as described above.
According to an aspect of the present invention there is provided a method of making components using an additive manufacture apparatus, said method comprising the steps of:
- producing a component by additive manufacture on a build plate;
- detecting a temperature of the component using a sensor;
- cooling the component.
Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described by way of example only, with reference to the accompanying figures, in which:
Figure 1 shows a prior art system for making components by additive manufacture (PRIOR ART);
Figure 2 shows a system for making components by additive manufacturing according to an embodiment of the present invention;
Figure 3 shows a rough schematic view of an apparatus for producing the solid carbon dioxide according to an embodiment of the present invention;
Figure 4 shows a flow chart illustrating a method of producing a component in an embodiment of the present invention.

### DETAILED DECSRIPTION

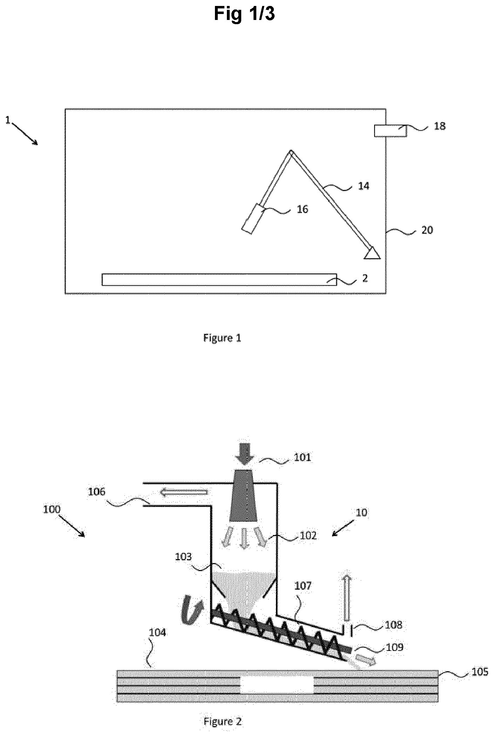

Figure 1 shows a system 1 for making components using a directed energy deposition (DED) method of additive manufacture. The system 1 comprises a manufacturing space bounded by an enclosure 20. A base plate 2 is located at the bottom of the manufacturing space. The system also comprises a deposition head 16 comprising a source of feedstock material, which is preferably wire, and an energy source arranged to melt the feedstock material as it is deposited. The energy source preferably comprises an electrical arc, but in some embodiments the energy source may be a laser or an electron beam. The position of the deposition head 16 is controlled by a robot arm 14, which is itself controlled by an electronic controller (not shown). An atmospheric conditioning subsystem 18 is also provided to ensure that the atmosphere within the manufacturing space is appropriate given the materials to be used to manufacture a component within the manufacturing space. The atmospheric conditioning subsystem may comprise a source of an inert process gas, which may be nitrogen, argon, or any other suitable process gas or mixture of process gases. The process gas will be selected based on various criteria, including low reactivity with the materials to be used in the manufacturing process.
As will be well understood by the skilled person, a system 1 as shown in figure 1 may be used to manufacture components by sequentially depositing layers of molten material on top of the base plate 2 until the component is formed in the desired shape. A final machining step will generally be required to remove the component from the base plate 2 and achieve the required dimensional tolerance for the finished component.
Although the molten material will solidify soon after deposition, the structure remains very hot during the manufacturing process, especially for relatively tall structures (in which cooling by conduction to the base plate is limited) or structures that are manufactured at low pressure (in which cooling by natural convection is limited). Accordingly, applications of DED for manufacture of larger components have hitherto been limited.
The inventors have recognized that it could be desirable to use solid CO₂, but it has not been widely used because, when a mixture of solid and liquid carbon dioxide is directed onto the component, there is a possibility that either the flow of the process gas will be disrupted thus leading to the flaws in the manufacturing, or the surface of the component being damaged by the inhomogeneous flow of both solid and liquid particles.

Figure 2 shows an apparatus 100 for manufacturing and subsequent dispensing of the solid CO₂ according to the embodiment of the present invention. The apparatus comprises a chamber 10 wherein the parts of the cooling system are located. Liquefied CO₂ 101 is initially stored in a pressurized container (not shown). It is understood that the pressure inside such a container is in the range of 14-50 bar. The liquefied CO₂ is then supplied into the chamber 10 (not shown on figure 2) by means of a nozzle with which the pressurized liquid CO₂ is released into the chamber which is under atmospheric pressure and temperature. It will be understood that various designs of nozzle for converting pressurised liquid CO₂ to solid CO₂ would be known to the skilled person, who could readily select a suitable nozzle.

When the pressurized CO₂ is released from the container into a receptacle 103 through the nozzle, the pressure reduction from the container pressure to atmospheric causes solid CO₂ 102 in the form of dry particles to form, also known as "dry ice" or "snow".

Gaseous CO₂ is also produced and no liquid CO₂ remains. The dry ice particles are accumulated at the bottom of the receptacle 103 and are kept there until they are to be discharged onto the surface of a component 104.

It is understood that the component 104 is a component manufactured by the system 1 by a DED method. The component is based on a base plate 2 of the system 1 and is built by depositing layers 105 of a feedstock material melted by an electric arc, in a manner that would be well understood by the skilled person. The feedstock material can be an alloy, more preferably a ferrous alloy. The ferrous alloy can be a steel, for example.

It is known that when releasing the liquified CO₂ into the medium with atmospheric or nearly atmospheric pressure not all the liquid CO₂ will be converted into the solid particles. Some of the liquid CO₂ will be converted to the gaseous carbon dioxide which is an undesirable component of the mixture to be used to cool the manufactured component.

To address this issue, the receptacle 103 further comprises at least one first conduit 106 that is designed to extract the gaseous carbon dioxide away from the receptacle 103 in order to avoid liquid CO₂ being discharged onto the surface of the component 104. It is understood that more than one conduit can be used to effect more efficient extraction. The extraction of the gaseous by-products can occur either naturally or by means of a built-in fan integrated into the structure of the at least one first conduit 106.

Once produced, the solid dry ice particles 102 are collected in the receptacle 103 from where they are constantly transferred to the component by means of a dosing mechanism 107. In the illustrated embodiment, the dosing mechanism is a spinning screw. It is controlled by a controller that controls the speed of delivery of the solid carbon dioxide to the surface of the component depending on the temperature of its surface.
It will be understood by the skilled person that the dosing mechanism can be any of the following: a spinning screw, a valve, a conveyor belt or any other means suitable for applying the solid carbon dioxide at a controllable rate. It is also understood that the dosing mechanism can comprise any means capable of continuously delivering the accumulated dry ice particles to the component. The dosing mechanism can comprise a dispensing aperture 109 to provide efficient distribution of the dry ice on the surface of the component. It is understood that the dispensing aperture can also be a nozzle.

During the process of transferring the solid carbon dioxide from the receptacle 103 through the dosing mechanism 107, some dry ice will be converted into gaseous CO₂ due to the pressure and temperature variations. This unwanted by-product can be further extracted by means of at least one second conduit 108 located before or in the vicinity of the dispensing aperture 109. The presence of another set of conduits just before the jet of the dry ice particles hits the component allows for a more efficient extraction of unwanted by-products.

As will be discussed in more detail below, the temperature of the component is detected by a temperature detector 110. The temperature detector can be, for example, an infrared camera. This camera can be located in the chamber 10, or near or attached to the robot arm 14, or in any location suitable for detecting the temperature of the surface of the component.

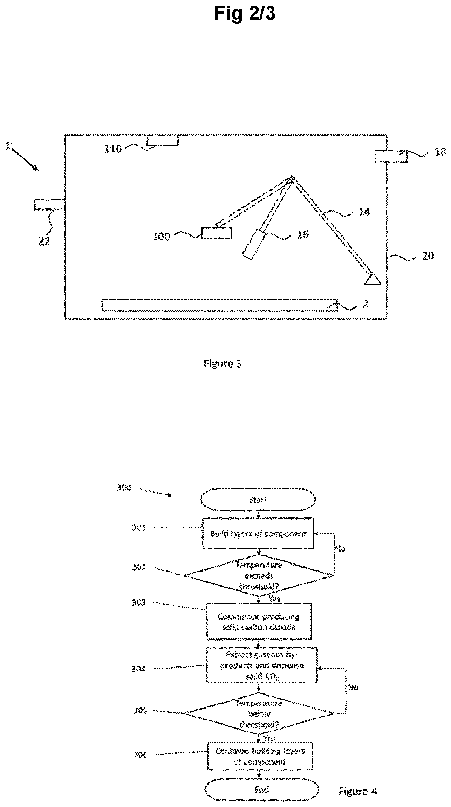

Figure 3 shows a system 1' for making components using a directed energy deposition (DED) method of additive manufacture according to an embodiment of the present invention. It further comprises an apparatus 100 for manufacturing and dispensing the solid CO₂ as shown in detail in figure 2. The apparatus 100 is attached to a robot arm 14. However, it is understood that this apparatus can be located anywhere in the enclosure 20, provided a mechanism for directing the CO₂ to the required location is present. The enclosure 20 also comprises a temperature detector 110 that is configured to detect variations in temperature of the component 2. It is understood that the detector 110 can be located in any area of the enclosure 20 that allows direct access to surface of the component 2.

The system 1' further comprises a controller 22 that is configured to control the production of the solid carbon dioxide, the dispensing of the resultant solid carbon dioxide, as well as to remove the unwanted gaseous by-products from the manufacturing area. It is understood that controller operates according to the following mechanism.

The detector 110 detects the temperature of the surface of the component. This data is sent to the controller which then initiates the production of the dry ice from the liquid carbon dioxide if the temperature of the component exceeds the pre-set threshold. Once the amount of the solid carbon dioxide is sufficient, the controller initiates the movement of the dispensing mechanism to dispense the dry ice onto the area of the component to be cooled down. The speed of the applying of the carbon dioxide depends on the readings of the detector that are continuously fed into the controller. Once the temperature drops below the preset threshold, it is assumed that the component is cooled and the controller stops the manufacturing and dispensing of the dry ice until the temperature once again exceeds the pre-set threshold, where the continuous cycle starts again. Alternatively, the amount of dry ice delivered to the component can be varied continuously, in proportion with the measured temperature, to achieve a more stable temperature than is possible with a simple on-off control method.

It will be understood that the controller 22 may also control the deposition head 16 to produce the component 2 and/or the atmospheric conditioning subsystem 18. However, this is not essential, and in some embodiments separate controllers may control the deposition head 16, the atmospheric control subsystem 18 and the cooling apparatus 100.

As discussed above, both the production of the solid carbon dioxide, its supply to the component and the extraction of the unwanted by-products can be controlled by controller 22. This controller evaluates which region of the component requires cooling based on the data received from the detector. The signal received form the detector is processed by a software and the controller then controls the step of manufacturing the solid carbon dioxide, the speed of its supply to the component and to which area for the component the solid CO₂ needs to be delivered. In such a manner a continuous and controlled production of solid CO₂ is provided together with efficient and precise cooling of the component build by the DED method.

Figure 4 shows in more details a method 300 which is implemented by a controller. In step 301 the controller is arranged to build the component by depositing layers of feedstock material. In step 302 the controller is arranged to detect the temperature of the parts of the component via a temperature detector (for example an infrared camera). If the temperature of the part of the component exceeds a pre-set threshold, the controller is configured to produce the solid carbon dioxide (step 303) in the amount necessary for cooling the part of the component. During the process the controller is configured to control the extraction of the gaseous by-products from at least a first conduit. Once the required amount of solid carbon dioxide is produced the controller is configured to start the dispensing mechanism to deliver the required amount of dry ice to the component (step 304). The speed of the delivery of the solid dry ice is also controlled by the controller. During this process the controller also controls the extraction of the gaseous by-products through an at least one a second conduit located before the dispensing point to provide efficient cooling structure in order to prevent disruption of the flow of the process gas during the DED method. Once the temperature of the part of the component is below the pre-set threshold, the process of the manufacturing of the component is then repeated (step 306). Once the component is produced, the process is finished.

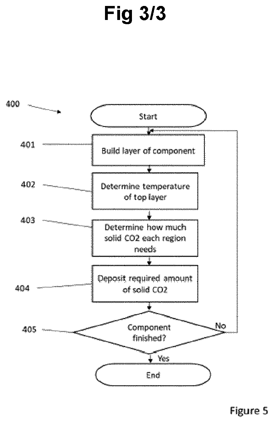

Figure 5 shows another method for cooling a component, in which the quantity of solid CO₂ delivered to the component varies in dependence on the measured temperature. In step 401 the controller is arranged to build one or more layers of the component by depositing one or more layers of feedstock material at the target areas. In step 402 the controller is arranged to detect the temperature of the top layer of the component via a temperature detector (for example an infrared camera). The method then proceeds to step 403 in which the controller determines the amount of solid CO₂ to be applied to the layer. For example, the layer may be divided into a plurality of small regions, and the controller may calculate an average temperature in each of the regions. The controller may then calculate the amount of solid CO₂ required to reduce the temperature in each of the regions to a target temperature. It will be understood that some parts of the layer may not require any solid CO₂, if the temperature in the region is already at or below the target temperature. It will also be well understood by the skilled person that solid carbon dioxide has a known cooling capacity per unit volume. Accordingly, the controller may determine a required cooling effect determined based on the measured temperature, and determine the amount of solid carbon dioxide required to achieve the required cooling effect.

Next, the method proceeds to step 404, in which the controller controls the dispensing mechanism to deliver the required amount of dry ice to each region of the component. The method then proceeds to step 405, in which the controller determines whether or not the component is finished. If the component is finished then the method ends. Otherwise, the method returns to step 401 and the process is repeated.

It will be understood that the terms "dry ice" and "solid carbon dioxide" (or "solid CO₂") are used interchangeably in the present specification.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### LIST OF REFERENCE SIGNS

1 manufacturing system
2 base plate
4 opening
10 chamber
14 Robot arm
16 enclosed channel
18 Atmospheric control subsystem
20 enclosure
22 controller
100 an apparatus for manufacturing and subsequent dispensing of the solid CO₂
101 liquefied CO₂
102 solid CO₂
103 receptacle
104 component
105 layers of feedstock material
106 at least one first conduit
107 dosing mechanism
108 at least one second conduit
109 dispensing aperture
110 detector

## Claims

1. A method of cooling a component (2) produced by additive manufacturing (AM) process, said method comprising the steps of:
- providing a source of a liquefied carbon dioxide (101);
- releasing the liquefied carbon dioxide into a chamber (20) to expand and cool;
- collecting formed solid carbon dioxide (102) in the chamber;
- extracting a non-solid carbon dioxide by-product via at least a first conduit (106); and
- applying the solid carbon dioxide to the component.

2. The method of claim 1, wherein the additive manufacturing process is a direct energy deposition (DED) method.

3. The method of claim 2, wherein the DED method is a wire arc additive manufacturing (WAAM) method.

4. The method of any preceding claims wherein the solid carbon dioxide (102) is applied to the component through a dispensing aperture (109), optionally wherein the dispensing aperture is part of nozzle.

5. The method of claim 4, wherein the solid carbon dioxide is supplied into the nozzle by means of a dosing mechanism (107).

6. The method of claim 5 wherein the dosing mechanism (107) is a spinning screw, a valve or a conveyor belt.

7. The method of claim 4, wherein the non-solid carbon dioxide by-product is further extracted through at least a second conduit located before the nozzle.

8. The method of any preceding claim, wherein the method further comprises a step of detecting a temperature of the component by means of a sensor (110), in particular by means of a thermal camera.

9. The method of claim 8, wherein the method comprises determining an amount of solid carbon dioxide (102) to be applied to the component in dependence on the measured temperature.

10. The method of any preceding claim, wherein the method further comprises the step of removing carbon dioxide gas generated during the cooling process.

11. The method of any preceding claim, wherein the component (2) is made from ferrous alloy.

12. An apparatus for cooling a component produced using AM process, said apparatus comprising:
- a source of a liquefied carbon dioxide (101),
- a dosing mechanism (107) configured to supply a solid carbon dioxide to the component through a nozzle; and
- at least a first conduit (106) for extracting non-solid carbon dioxide by-product; and
- a controller (22)
wherein the controller is arranged to:
- control a process of producing the component;
- control a process of producing a solid carbon dioxide from the liquefied carbon dioxide; and
- control cooling of the component by providing the solid carbon dioxide to the component by means of the dosing mechanism.

13. The apparatus (1') of claim 12 wherein the apparatus further comprises at least a second conduit located before the nozzle.

14. An apparatus (1') for producing a component using AM process, said apparatus comprising:
- a manufacturing space (20);
- a heat source;
- a source of a feedstock material;
- a source of a process gas;
- a cooling apparatus as claimed in claims 12-13.

15. A method of making components using an additive manufacture apparatus of claim 14, said method comprising the steps of:
- producing a component by additive manufacture on a build plate;
- detecting a temperature of the component using a sensor;
- cooling the component using the method of any of the claims 1-11.
